# EUROPÄISCHE PATENTSCHRIFT

(11) **EP 1 191 621 B1**
(45) Veröffentlichungstag und Bekanntmachung des Hinweises auf die Patenterteilung: **24.03.2010**
(21) Anmeldenummer: 01113339.4
(22) Anmeldetag: 01.06.2001
(51) Int. Cl.: H01M 8/10, H01M 8/02, C08J 5/22

(54) **Membran für eine Direkt-Methanol-Brennstoffzelle (DMFC)**
Membrane for a direct methanol fuel cell (DMFC)
Membrane pour une pile à combustible directe au méthanol (DMFC)

(30) Priorität: 22.09.2000 DE 10047551
(43) Veröffentlichungstag der Anmeldung: 27.03.2002
(73) Patentinhaber: GKSS-Forschungszentrum Geesthacht GmbH, 21502 Geesthacht (DE)
(72) Erfinder: Pereira Nunes, Suzana Prof., 21502 Geesthacht (DE); Peinemann, Klaus-Viktor Dr., 21502 Geesthacht (DE); Rikowski, Eckhard, 33102 Paderborn (DE); Paul, Dieter Prof., 14532 Teltow (DE); Fritsch, Detlev Dr., 21465 Reinbek (DE); Ruffmann,Bastian Dr., 21502 Geesthacht (DE)
(74) Vertreter: Seemann, Ralph

(56) Entgegenhaltungen:
- WO-A1-98/11614
- DE-A1- 19 909 930
- US-A- 6 059 943
- BONNET B ET AL: "HYBRID ORGANIC-INORGANIC MEMBRANES FOR A MEDIUM TEMPERATURE FUEL CELL" JOURNAL OF NEW MATERIALS FOR ELECTROCHEMICAL SYSTEMS, SN, MONTREAL, CA, Bd. 3, Nr. 2, 2000, Seiten 87-92, XP000997606 ISSN: 1480-2422
- ALBERTI G ET AL: "Inorgano-organic proton conducting membranes for fuel cells and sensors at medium temperatures" JOURNAL OF MEMBRANE SCIENCE, ELSEVIER SCIENCE, AMSTERDAM, NL, Bd. 172, Nr. 1-2, Juli 2000 (2000-07), Seiten 233-239, XP004197637 ISSN: 0376-7388
- BARADIE B ET AL: "Thermostable ionomeric filled membrane for H2/O2 fuel cell" JOURNAL OF POWER SOURCES, ELSEVIER SEQUOIA S.A. LAUSANNE, CH, Bd. 74, Nr. 1, 15. Juli 1998 (1998-07-15), Seiten 8-16, XP004128685 ISSN: 0378-7753

## Beschreibung

Die Erfindung betrifft ein Verfahren zur Herstellung einer anorganisch modifizierten Membran für elektrochemische Vorrichtungen, insbesondere für die Direkt-Methanol-Brennstoffzelle, aus einem organischen Polymer und einer darin fein verteilten anorganischen Phase und die Verwendung einer nach dem Verfahren hergestellten Membran für eine Direkt-Methanol-Brennstoffzelle.

Aufgrund der knappen Vorräte an fossilen Brennstoffen und der bei deren Verbrennung auftretenden Emissionen wird derzeit intensiv nach alternativen Wegen für eine Energieumwandlung bei gleichzeitig niedriger Emission gesucht. In der Zukunft könnten dabei elektrochemische Vorrichtungen eine wesentliche Rolle spielen, welche in der Lage sind, Strom zu produzieren und dabei keine Emissionen zu verursachen. In diesem Zusammenhang sei beispielsweise auf die Brennstoffzelle verwiesen.

Von den verschiedenen Technologien stellt die sog. Direkt-Methanol-Brennstoffzelle (Direct Methanol Fuel Cell; DMFC) eine der vielversprechendsten Möglichkeiten für mobile Anwendungen dar, da diese DMFC technisch einfach aufgebaut ist und die Lagerung des Methanols einfach ist. Bei der DMFC wird Methanol in Form einer wässrigen Lösung in die Elektroden-Membran-Elektroden-Einheit (Membrane Electrode Assembly, MEA) eingeführt. Die DMFC kann dabei ebenso einfach konstruiert sein wie eine Wasserstoff-Brennstoffzelle. Die Brennstoffspeicherung ist jedoch viel einfacher und kostengünstiger.

Die DMFC wandelt Methanol an der Anode direkt in Protonen und CO₂ um. Die Protonen werden an den Elektrolyten, bei dem es sich um eine spezielle Polymermembran handelt, abgegeben. An der Kathode wird Sauerstoff aus der Luft reduziert und bildet zusammen mit den Protonen, die durch den Elektrolyten bzw. die Polymermembran gewandert sind, Wasser.

Verschiedene Problemstellungen der DMFC sind jedoch noch nicht hinreichend gelöst, wodurch der Durchbruch der DMFC in der Autoindustrie bisher verhindert wurde. Zu diesen Problemstellungen gehören insbesondere die Wirkungseinbußen in Folge von Methanoldurchtritt durch die Elektrolytmembran. Bedingt dadurch verfügt die DMFC nur über eine schwache Leistung.

Membranen für die DMFC sollten über eine hohe Protonenleitfähigkeit, eine niedrige Wasser- und Methanolpermeabilität und über eine gute Stabilität gegenüber radikalischen Angriffen verfügen sowie billig herzustellen sein. Bei den bisher eingesetzten Membranen handelt es sich beispielsweise um solche, die unter der Marke Nafion vertrieben werden. Die Kosten dieser Nafion-Membranen sind jedoch zu hoch. Zudem sind die Methanol- und Wasserpermeabilitäten dieser bekannten Membranen zu groß, als daß sie erfolgversprechend in eine DMFC eingesetzt werden könnten.

Es sind schon die verschiedensten Versuche unternommen worden, um verbesserte Membranen zu entwickeln, die für die oben beschriebenen Zwecke eingesetzt werden können. Dazu zählen auch anorganisch modifizierte organische Membranen, wie sie beispielsweise in der US-A 160 599 43 beschrieben sind. Weitere organisch-anorganische Materialien, die u. a. zur Herstellung von Membranen eingesetzt werden können, sind an folgenden Stellen beschrieben: S.P. Nunes, J. Schultz und K. V. Peinemann; Silicone membranes with silica nanoparticles in Journal of Material Science-Letters, 15 (1996) 1139 sowie M. L. Sforza, I. V. Yoshida und S. P. Nunes; Organic-inorganic membranes prepared by hydrolysis and condensation of polyetherdiamine/epoxy silane in Journal of Membrane Science 159 (1999) 197.

Aus Bonnet B. et al.: "Hybrid organic-inorganic membranes for a medium temperature fuel cell", Journal of New Materials for Electrochemical Systems, Montreal, Band 3, Nr. 2, 2000, Seiten 87 - 92, sind organisch-anorganische Hybridmembranen für eine Brennstoffzelle bei mittlerer Temperatur bekannt. Dabei werden sulfonierte Polyetheretherketone als Polymermatrix zusammen mit anorganischen Protonenleitern verwendet, die Siliziumoxide und Zirkoniumphosphate einschließen.

In Alberti G. et al.: "Inorgano-organic proton conducting membranes for fuel cells and sensors at medium temperatures", Journal of Membrane Science, Amsterdam, Band 172, Nr. 1 - 2, Juli 2000, Seiten 233 - 239, werden anorganisch-organische, Protonen leitende Membranen für Brennstoffzellen und Sensoren bei mittleren Temperaturen beschrieben, die Zirkoniumphosphonate als Protonenleiter umfassen.

Aufgabe der vorliegenden Erfindung ist es, eine in einer elektrochemischen Vorrichtung einsetzbare Membran bereitzustellen, die nicht nur über eine hervorragende Stabilität und eine hohe Protonenleitfähigkeit verfügt, sondern zusätzlich auch eine niedrige Methanolpermeabilität besitzt.

Gelöst wird diese Aufgabe durch ein Verfahren zur Herstellung einer anorganisch modifizierten Membran gemäß der Lehre der Ansprüche sowie eine entsprechende Verwendung einer solchen Membran.

Bei dem Polymer bzw. der Polymermatrix der erfindungsgemäß hergestellten Membran handelt es sich um ein sulfoniertes Polymer. Dieses sulfonierte Polymer kann üblicher Art sein. Vorzugsweise handelt es sich dabei um ein sulfoniertes Polyetheretherketon (PEEK).

Für die Herstellung des sulfonierten Polymers kann man verschiedene Wege beschreiten. So kann man beispielsweise von einem Polyphenylsulfon ausgehen, das von der Fa. Amoco unter der Bezeichnung "Radel R" vertrieben wird. Zur Sulfonierung löst man dieses Polyphenylsulfon in vorzugsweise Dichlormethan und tropft Dichlormethan/SO₃ zu dieser Polymerlösung. Nach Extraktion mit Wasser erhält man eine Fraktion mit einem Sulfonierungsgrad von mehr als 0,5 und vorzugsweise mehr als 0,6.

Es ist auch möglich, als Sulfonierungsmittel (CH₃)₃SiSO₃Cl und/oder konz. Schwefelsäure einzusetzen. Dabei erhält man ein homogenes Produkt, dessen Sulfonierungsgrad man variieren kann. Dieser Sulfonierungsgrad beträgt 0,6 - 2.

Die erfindungsgemäß hergestellte Membran zeichnet sich ferner dadurch aus, dass sie über eine fein verteilte anorganische Phase bzw. ein fein verteiltes anorganisches Netzwerk aus Oxiden von Silizium, organisch modifiziertem Silizium, Titan und/oder Zirkonium verfügt. Mit anderen Worten, in dem organischen Polymer bzw. der Polymermatrix befindet sich ein feines anorganisches Netz aus SiO₂ (oder organisch modifiziertem SiO₂, TiO₂ und/oder ZrO₂). Zumindest ein Teil dieser

Oxide kann durch Phosphate ersetzt sein, worauf nachstehend näher eingegangen wird. Der anorganische Gehalt der erfindungsgemäß hergestellten Membran kann dabei bis zu 30 Gew.-% oder mehr betragen, ohne dass dies die mechanische Stabilität der Membranen nachteilig beeinflusst.

Zur erfindungsgemäßen Herstellung der Membran führt man die anorganische Modifizierung vorzugsweise in Form eines sog. Sol-Gel-Verfahrens durch. Die erfindungsgemäß hergestellte Membran ist somit vorzugsweise dadurch erhältlich, dass man in einer ersten Stufe a) eine Lösung des sulfonierten Polymers herstellt. In einer zweiten Stufe b) gibt man ein Zirkon-Alkoxid, ein Titanium-Alkoxid, ein Silizium-Alkoxid bzw. ein Alkoxysilan und/oder ein organisch modifiziertes Silizium-Alkoxid der Polymerlösung zu. Anschließend hydrolysiert man unter Bildung der genannten Oxide.

In einer dritten Stufe c) stellt man die Membran bzw. den Membranfilm aus der in der Stufe b) erhaltenen Gießlösung auf per se bekannte Weise her, vorzugsweise durch Lösungsmittelverdampfung bei erhöhter Temperatur, vorzugsweise bei 70°C.

Um die Oxide zumindest teilweise in Phosphate zu überführen, sofern dies gewünscht ist, kann man entweder Phosphorsäure zu der in Stufe b) erhaltenen Gießlösung hinzugeben oder die nach der Stufe c) erhaltene Membran in eine Phosphorsäurelösung tauchen.

Ferner kann man zum Einbringen von Phosphaten bzw. zum Ersatz der Oxide durch Phosphate zuvor in einem getrennten Verfahren hergestelltes Zirkonphosphat als Dispersion zu der Polymerlösung hinzugeben. Der anorganische Anteil dieser Membranen kann bis zu 30 Gew.-% und mehr betragen.

Zur Verbesserung der Dispergierung der anorganischen Phase kann man die Ausbildung von covalenten Bindungen mit dem organischen Polymer fördern. Zur Durchführung der anorganischen Modifizierung mit Siliziumalkoxiden bzw. Alkoxysilanen löst man das Alkoxysilan und das organische Polymer zweckmäßigerweise in einem üblichen polaren Lösungsmittel. Die Ausbildung eines Silica-Netzwerkes in der Lösung bewirkt man durch Zugabe von Wasser und eines Säurekatalysators. Im einfachsten Fall kann man als Alkoxysilan dabei Tetraethoxysilan einsetzen. Die Dispergierung der anorganischen Komponente kann man jedoch beträchtlich verbessern, wenn man organisch modifizierte Alkoxysilane zur Anwendung bringt. Zweckmäßigerweise setzt man dabei Silane mit organischen Resten ein, die in der Lage sind, mit den Ketten des organischen Polymers Wasserstoffbindungen auszubilden oder sogar starke Säure-Base-Wechselwirkungen zwischen dem anorganischen Netzwerk und dem sulfonierten Polymer herbeizuführen. Die Wechselwirkung zwischen dem organischen Polymer und dem anorganischen Netzwerk bzw. der anorganischen Phase kann weiterhin dadurch verbessert werden, daß man ein chemische Reaktion fördert. Zu diesem Zwecke ist es beispielsweise möglich, das sulfonierte Polymer mit Carbonyl-Diimidazol (CDI) umzusetzen. Desweiteren kann man ein Aminosilan zu der Lösung hinzugeben. Dies ist in dem nachstehenden Reaktionsschema formelmäßig dargestellt.

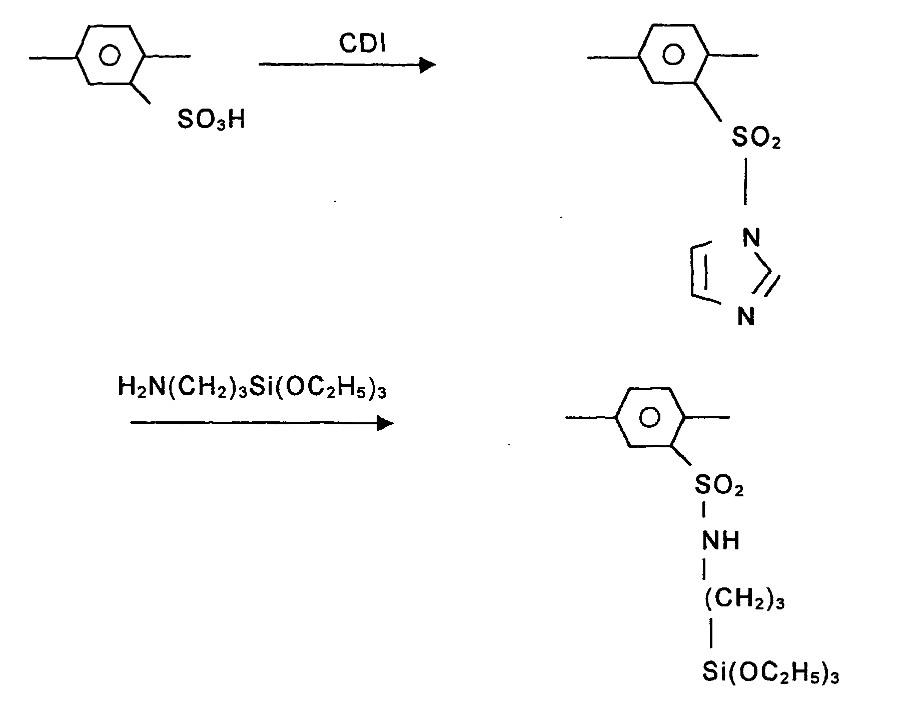

Die Hydrolyse des Aminosilans zusammen mit den anderen Silanen der Lösung führt zu einem gemeinsamen anorganischen Netzwerk.

Um einer Abnahme der Leitfähigkeit entgegenzuwirken, können organische Modifizierungen, welche den Protonentransport fördern, in das anorganische Netzwerk inkorporiert werden. Dazu kann man beispielsweise einsetzen: Phenyltrialkoxysilane und durch Imidazolin modifizierte Trialkoxysilane. Dadurch erhält man ein durch Phenyl modifiziertes Silicanetzwerk, das später sogar noch sulfoniert werden kann. Die durch Imidazolin modifizierten Trialkoxysilane oder andere Silane, welche basische Gruppen, beispielsweise Imidazol oder Pyridin enthalten, führen zu einem durch Imidazolin modifiziertem SilicaNetzwerk.

Zur anorganischen Modifizierung mit Hilfe von Titan- und Zirkoniumalkoxiden setzt man vorzugsweise Ti(OEt)₄ oder Zr(OPr)₄ ein, die man der Polymerlösung zugibt. Anschließend hydrolysiert man "insitu" durch Zugabe von Wasser. Um die Dispergierung zu verbessern, kann man Acetylaceton hinzugeben. Ferner kann man erforderlichenfalls auch Komplexierungsmittel einsetzen, um eine Präzipitierung zu verhindern. Zur Erhöhung der Leitfähigkeit kann man zumindest einen Teil der wie oben beschrieben erhaltenen Oxide in Phosphate überführen. Dies kann beispielsweise dadurch geschehen, dass man Phosphorsäure zur Gießlösung hinzufügt. Ferner ist es möglich, den hergestellten Membranfilm in Phosphorsäure einzutauchen.

Auf die oben beschriebene Weise ist es möglich, eine gut dispergierte anorganische Phase bzw. ein anorganisches Netzwerk zu erhalten mit 20 % TiO₂, ZiO₂ oder SiO₂ in einer sulfonierten Polymermembran.

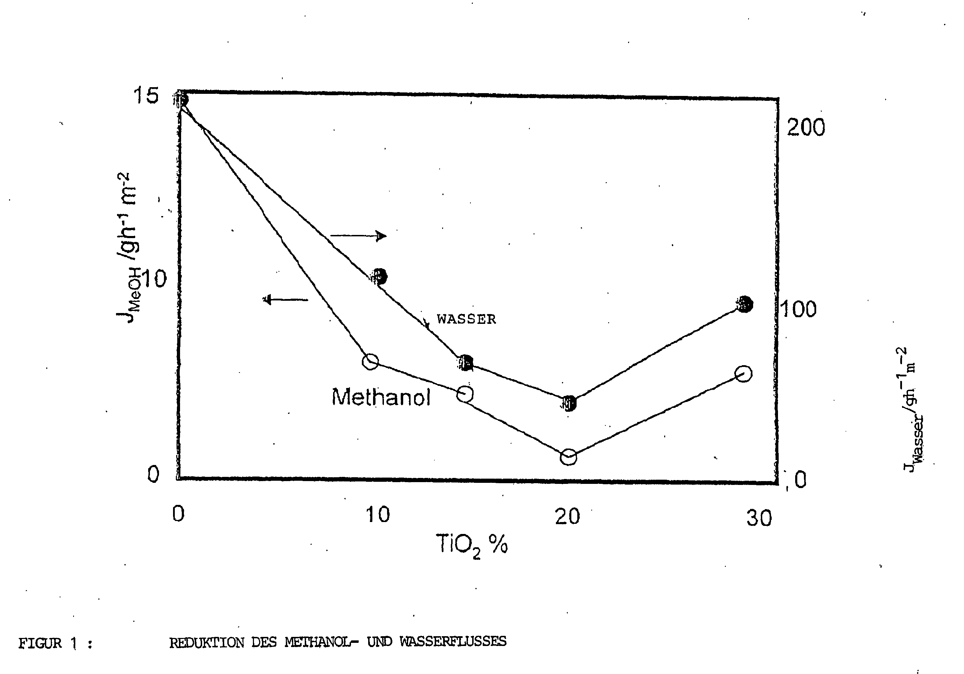

Die erfindungsgemäß hergestellte Membran verfügt über eine niedrige Methanol- und Wasserpermeabilität und über eine hohe Protonenleitfähigkeit. In der nachfolgenden Figur 1 sind die Wasser- und Methanolpermeabilitäten als Funktion des Gehalts an anorganischem Material (in diesem Falle TiO₂) aufgeführt. Die entsprechende Reduktion durch die Membran war sehr wirkungsvoll. Es konnte eine Reduktion auf bis zu 1/10 durch die Einführung der anorganischen Phase festgestellt werden.

Darüber hinaus bewirkt das anorganische Netzwerk eine Reduzierung der Quellung der resultierenden Membranen. Das kann soweit führen, dass eine bei Raumtemperatur in Methanol/Wasser-Lösung nicht stabile Membran bei zumindest 55°C in der gleichen MethanoI/Wasser-Lösung noch stabil ist.

Die Erfindung wird im folgenden anhand der nachstehenden Beispiele näher erläutert.

### Beispiel 1

Als Ausgangspolymer wurde ein Polyphenylsulfon eingesetzt, das unter der Bezeichnung "Radel R" vertrieben wird. Dieses wurde bis zu einem Sulfonierungsgrad von 0,6 sulfoniert. Dazu wurde das Polymer in Dimethylformamid (DMF) gelöst. Die Lösung wurde 3 h bei 60° C mit Carbonyl-Diimidazol (CDI) (etwa 0,04 CDI pro 1 g Radel) gerührt. Etwa 0,06 g Aminosilan wurden zu der Lösung gegeben und während eines Zeitraumes von 3 h bei Raumtemperatur umgesetzt. Zu dieser Lösung wurden unterschiedliche Mengen an Ti(OEt)₄ hinzugeben und während 20 h umgesetzt. Ferner wurde Acetylaceton zur Verbesserung der Dispersion hinzugegeben. Die so erhaltenen Gießlösungen wurden gegossen; das Lösungsmittel wurde bei 70° C verdampft, wobei Filme mit einer Dicke von etwa 40 - 60 µm erhalten wurden. Die Filme wurden für eine Woche in 15 %-ige H₂PO₄ getaucht.

Mit den so erhaltenen Membranen wurden Pervaporationsversuche bei Raumtemperatur durchgeführt, wobei eine Feedlösung aus 20 % Methanol und 80 % Wasser eingesetzt wurde. Nach 6 h wurden die in der nachstehenden Tabelle aufgeführten Ergebnisse erhalten.

| **Verhältnis von Radel/Ti(OEt)₄** | **Wasserfluß (g/hm²)** | **Methanolfluß (g/hm²)** | **% Methanol im Permeat** |
|---|---|---|---|
| 1:0 | 198 | 15 | 7 |
| 1:0,2 | 21 | 0,5 | 3 |
| 1:0,3 | 106 | 6 | 5 |
| 1:0,4 | 57 | 4 | 7 |
| 1:0,6 | 36 | 1 | 4 |
| 1:0,8 | 99 | 6 | 6 |

### Beispiel 2

Es wurde ähnlich verfahren wie im Beispiel 1, wobei 0,3 g Zr(OPr)₄ zu 1 g sulfoniertem Radel-Polymer hinzugegeben wurden. Der Methanolfluß nahm auf 1,6 g/hm² und der Wasserfluß auf 51 g/hm² ab.

### Beispiel 3

Es wurden Lösungen der folgenden Zusammensetzungen hergestellt: 1 g sulfoniertes Radel-Polymer/0,3 g Phenyltrimethoxysilan 0,04-0,08 g AES/0,04 g Wasser/6 g DMF. Auf Glasplatten wurden bei 80° C Filme hergestellt. Zur Verbesserung der Dispergierung der anorganische Phase in der organischen Matrix wurde 1,1'-Carbonyl-Diimidazol (CDI) zu der Lösung in einem Anteil von etwa 0,04 g CDI pro 1 g Radel-Polymer hinzugegeben.

Mit den so hergestellten Membranen wurden die in der nachstehenden Tabelle aufgeführten Werte für die Pervaporation für Methanol und Wasser erhalten. In der Tabelle sind auch zu Vergleichszwecken die Werte einer bekannten Nafionmembran und für eine Membran, die aus dem sulfonierten Radel-Polymer besteht, aufgeführt.

| **Membran** | **Dicke** | **Zeit** | **Fluß (g/hm²)** | |
|---|---|---|---|---|
| | **(µm)** | **(h)** | **Methanol** | **Wasser** |
| **Nafion 117** | 160 | 3 | 322 | 1574 |
| | | 6 | 348 | 1699 |
| **sulfoniertes Radel-Polymer** | 29 | 3 | 4 | 92 |
| | | 6 | 6 | 103 |
| | | 9 | 9 | 129 |
| **sulfoniertes Radel-Polymer/CDI/23% PMS/AS(3d, 60C) (erfindungsgemäße Membran)** | 27 | 3 | 2 | 31 |
| | | 6 | 4 | 55 |
| | | 9 | 4 | 51 |

### Beispiel 4

Als Ausgangspolymer wurde ein Polyetheretherketon (PEEK) eingesetzt. Dieses wurde bis zu einem Sulfonierungsgrad von ca. 0,9 sulfoniert. Es wurden Lösungen wie in Beispiel 1 mit Zr(OPr)₄ hergestellt. Ferner wurde diesen Lösungen in DMF dispergiertes Zirkonphosphat (ZP) zugegeben. Mit den so hergestellten Membranen wurden die in der nachstehenden Tabelle aufgeführten Werte für die Pervaporation für Methanol und Wasser erhalten. Die Membranen aus reinem sulfonierten PEEK waren bei Raumtemperatur (25 °C) in der Methanol/Wasser-Feedlösung nicht stabil.

| **Membran** | **Dicke** | **Zeit** | **Fluß (g/hm²)** | |
|---|---|---|---|---|
| | **(µm)** | **(h)** | **Methanol** | **Wasser** |
| **sulfoniertes PEEKI 16 % ZP/14 % ZrO₂** | 90 | 1 | 51 | 737 |
| **sulfoniertes PEEKI 20 % ZP/10 % ZrO₂** | 90 | 1 | 34 | 651 |

## Patentansprüche

1. Verfahren zur Herstellung einer anorganisch modifizierten Membran für elektrochemische Vorrichtungen, insbesondere für die Direkt-Methanol-Brennstoffzelle, aus einem organischen Polymer und einer darin fein verteilten anorganischen Phase, wobei es sich bei dem Polymer um ein sulfoniertes Polymer handelt und die anorganische Phase aus Oxiden von Silizium, organisch modifiziertem Silizium, Titan und/oder Zirkonium aufgebaut ist, wobei die Oxide zumindest teilweise durch Phosphate ersetzt sein können, **dadurch gekennzeichnet, dass** man
a) in einer ersten Stufe eine Lösung des sulfonierten Polymers hergestellt,
b) in einer zweiten Stufe ein Zirkonium-Alkoxid, ein Titan-Alkoxid, ein Silizium-Alkoxid und/oder ein organisch modifiziertes Silizium-Alkoxid der Polymerlösung einverleibt und anschließend zu einem Oxid hydrolysiert, und
c) aus der erhaltenen Gießlösung die Membran herstellt, und, falls das Oxid zumindest teilweise in ein Phosphat überführt werden oder durch ein Phosphat ersetzt sein soll,
d) entweder Phosphorsäure zu der in Stufe b) erhaltenen Gießlösung hinzugibt, die nach der Stufe c) erhaltene Membran in eine Phosphorsäurelösung taucht oder der in Stufe b) hergestellten Gießlösung eine Dispersion von Zirkonphosphat hinzugibt.

2. Verfahren nach Anspruch 1, **dadurch gekennzeichnet, dass** es sich bei dem sulfonierten Polymer um ein sulfoniertes Polyetheretherketon handelt.

3. Verfahren nach Anspruch 1 oder 2, **dadurch gekennzeichnet, dass** der Sulfonierungsgrad des sulfonierten Polymers mindestens 0,5 beträgt.

4. Verfahren nach einem der Ansprüche 1 bis 3, **dadurch gekennzeichnet, dass** das sulfonierte Polymer durch Behandlung eines üblichen Polymermaterials mit SO₃ oder (CH₃)₃SiSO₃Cl oder konzentrierter H₂SO₄ erhältlich ist.

5. Verfahren nach einem der Ansprüche 1 bis 4, **dadurch gekennzeichnet, dass** man die Membran in Stufe c) durch Verdampfen des Lösungsmittels bei erhöhter Temperatur und insbesondere bei ca. 70°C herstellt.

6. Verwendung einer nach einem der Ansprüche 1 bis 5 hergestellten Membran in einer elektrochemischen Vorrichtung, wobei die Membran gegenüber einer Membran, die nach Anspruch 1 ohne Schritt b) hergestellt ist, einen um einen Faktor von wenigstens 1,5 verminderten Wasserfluss und einen um einen Faktor von wenigstens 2 verminderten Methanolfluss aufweist.

7. Verwendung nach Anspruch 6, **dadurch gekennzeichnet, dass** es sich bei der elektrochemischen Vorrichtung um eine Direkt-Methanol-Brennstoffzelle handelt.

## Claims

1. A method of manufacturing an inorganically modified membrane for electrochemical devices, particularly for Direct Methanol Fuel Cells, comprising an organic polymer and an inorganic phase finely distributed therein, wherein the polymer is a sulphonated polymer and the inorganic phase is constituted by oxides of silicon, organically modified silicon, titanium and/or zirconium, wherein the oxides can be replaced at least partially by phosphates,
**characterised in that**
a) a solution of the sulphonated polymer is produced in a first step,
b) a zirconium alkoxide, a titanium alkoxide, a silicon alkoxide and/or an organically modified silicon alkoxide is incorporated into the polymer solution and subsequently hydrolysed to form an oxide in a second step and
c) the membrane is produced from the pouring solution produced and, if the oxide is to be converted at least partially into a phosphate or replaced by a phosphate
d) either phosphoric acid is added to the pouring solution produced in step b), the membrane obtained from step c) is dipped into a phosphoric acid solution or a dispersion of the zirconium phosphate is added to the pouring solution produced in step b).

2. A method as claimed in Claim 1, **characterised in that** the sulphonated polymer is a sulphonated polyetheretherketone.

3. A method as claimed in Claim 1 or 2, **characterised in that** the degree of sulphonation of the sulphonated polymer is at least 0.5.

4. A method as claimed in Claims 1 to 3, **characterised in that** the sulphonated polymer is obtainable by treating a conventional polymer material with SO₃ or (CH₃)₃SiSO₃Cl or concentrated H₂SO₄.

5. A method as claimed in one of Claims 1 to 4, **characterised in that** the membrane is produced in step c) by evaporating the solvent at increased temperature and, in particular, at ca. 70°C.

6. The use of a membrane manufactured in accordance with one of Claims 1 to 5 in an electrochemical device, wherein the membrane has a water flow reduced by a factor of at least 1.5 and a methanol flow reduced by a factor of at least 2 in comparison to a membrane which was manufactured in accordance with Claim 1 without step b).

7. The use as claimed in Claim 6, **characterised in that** the electrochemical device is a Direct-Methanol Fuel Cell.

## Revendications

1. Procédé de fabrication d'une membrane modifiée par voie inorganique pour dispositifs électrochimiques, en particulier pour pile à combustible à méthanol direct, à partir d'un polymère organique et d'une phase inorganique finement répartie à l'intérieur, dans lequel il s'agit concernant le polymère d'un polymère sulfoné et dans lequel la phase inorganique est formée d'oxydes de silicium, de silicium à modification organique, de titane et/ou de zirconium, les oxydes pouvant être remplacés au moins partiellement par des phosphates, **caractérisé en ce que** :
a) lors d'une première étape, on fabrique une solution du polymère sulfoné,
b) lors d'une seconde étape, on incorpore à la solution polymère un alcoxyde de zirconium, un alcoxyde de titane, un alcoxyde de silicium et/ou un alcoxyde de silicium modifié par voie organique, puis on hydrolyse en un oxyde, et
c) à partir de la solution de coulée obtenue, on fabrique la membrane, et, dans le cas où l'oxyde doit être converti au moins partiellement en un phosphate ou être remplacé par un phosphate,
d) soit on ajoute de l'acide phosphorique à la solution de coulée obtenue à l'étape b), on plonge la membrane obtenue après l'étape c) dans une solution d'acide phosphorique, soit on ajoute à la solution de coulée fabriquée à l'étape b) une dispersion de phosphate de zircon.

2. Procédé selon la revendication 1, **caractérisé en ce qu'**il s'agit concernant le polymère sulfoné d'une polyétheréthercétone sulfonée.

3. Procédé selon la revendication 1 ou 2, **caractérisé en ce que** le degré de sulfonation du polymère sulfoné est au moins égal à 0,5.

4. Procédé selon l'une des revendications 1 à 3, **caractérisé en ce que** le polymère sulfoné peut être obtenu par traitement d'un matériau polymère usuel avec SO₃ ou (CH₃)₃SiSO₃Cl ou H₂SO₄ concentré.

5. Procédé selon l'une des revendications 1 à 4, **caractérisé en ce que** l'on fabrique la membrane à l'étape c) par évaporation du solvant à une température élevée, et en particulier à environ 70 °C.

6. Utilisation d'une membrane fabriquée selon l'une des revendications 1 à 5 dans un dispositif électrochimique, dans laquelle la membrane présentant, par rapport à une membrane qui est fabriquée selon la revendication 1 sans l'étape b), un écoulement d'eau réduit d'un facteur au moins égal à 1,5 et un écoulement de méthanol réduit d'un facteur au moins égal à 2.

7. Utilisation selon la revendication 6, **caractérisée en ce qu'**il s'agit concernant le dispositif électrochimique d'une pile à combustible à méthanol direct.
